# EUROPEAN PATENT SPECIFICATION

(11) **EP 3 928 851 B1**
(45) Date of publication and mention of the grant of the patent: **22.11.2023**
(21) Application number: 21159775.2
(22) Date of filing: 26.02.2021
(51) Int. Cl.: B01D 29/35, B01D 29/64

(54) **ELEMENT FOR CLEANING A FILTERING SURFACE**
ELEMENT ZUR REINIGUNG EINER FILTERFLÄCHE
ÉLÉMENT DE NETTOYAGE D'UNE SURFACE DE FILTRAGE

(30) Priority: 28.02.2020 IT 202000000955 U
(43) Date of publication of application: 29.12.2021
(73) Proprietor: ELFI S.r.l., 43044 Collecchio (PR) (IT)
(72) Inventor: COLONNA, Omar, 43044 COLLECCHIO (PR) (IT); VIGNALI, Luca, 43044 COLLECCHIO (PR) (IT)
(74) Representative: Fanzini, Valeriano

(56) References cited:
- EP-A1- 2 481 461
- EP-A1- 3 424 578
- CN-A- 108 704 352
- KR-A- 20150 025 485
- US-A1- 2008 047 885

## Description

The present invention relates to an element for cleaning a filtering surface of a filter, which is adapted to retain solid particles which are contained in a respective fluid, in particular in the form of a liquid, and preferably consisting of water.

Elements are known for cleaning a filtering surface of a filter, which is adapted to retain solid particles contained in water, which filter is inserted in a corresponding filtration device which is usable in respective civil or industrial plants which use or treat said water.

One example is disclosed in KR 2015 0025485 A.

In these already known filtration devices, the filter is defined by a corresponding cylindrical body, which has corresponding openings, or holes, for the passage of said fluid and for retaining said solid particles, and the respective cleaning element comprises a respective block, which has a respective end surface, which is adapted to be arranged at, and preferably in contact with, said surface to be cleaned of said filter, and in which end surface is provided at least one corresponding opening, in particular slit-shaped, through which said solid particles retained by the same filter are sucked.

The respective already known suction block further comprises corresponding nozzle means in communication with said suction opening, and in which the respective nozzle is defined at the end of a corresponding tube for connection to a corresponding suction duct and which is adapted to support the same cleaning block.

In the already known cleaning elements, the connection tube defining the respective suction nozzle has a corresponding outer surface and is inserted in a corresponding receiving cavity of said cleaning block, in a sliding contact relationship with the peripheral surface defining the same cavity, however, such a connection has excessive losses in the suction of the solid particles.

The need is felt in the field to increase the suction efficiency.

Furthermore, the need is also felt in the field to use the cleaning element also with chemically aggressive fluids, for example also with sea water.

With the present invention it is wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be deduced from the above.

An element for cleaning a filtering surface is therefore provided, in particular in the form of a cylindrical surface, of a corresponding filter, which is adapted to retain solid particles which are contained in a respective fluid, in particular in the form of a liquid, and preferably consisting of water; preferably said filter is defined by a corresponding peripherally extended body, in particular cylindrical, which has corresponding openings, or holes, for the passage of said fluid and for retaining said solid particles, which filter is inserted in a filtration device which is usable in corresponding civil or industrial plants which use or treat said fluid; said cleaning element further comprises at least one nozzle, in particular opening into a corresponding inner chamber of said block in communication with said suction opening, in particular the respective nozzle being defined at the end of a corresponding connection tube to a corresponding suction duct and is adapted to support, in particular at the respective free end, the same cleaning block; said connection tube defining the respective suction nozzle has a corresponding outer surface and is inserted in a corresponding receiving cavity of said cleaning block, in a sliding contact relationship with the same peripheral surface defining said cavity; characterised in that, between said outer surface of said connection tube and said peripheral surface defining the same receiving cavity, at least one respective gasket is provided, which is adapted to allow a corresponding hermetic seal during the suction step of said solid particles.

Thereby, the production of losses can be avoided in the suction step of said solid particles, and thus the suction efficiency is increased.

This and other innovative aspects are, however, set forth in the appended claims, the technical features of which can be found, together with the corresponding advantages achieved, in the following detailed description, illustrating a purely non-limiting example of the embodiment of the invention, which is made with reference to the appended drawings, in which:
- figure 1 illustrates a schematic view in longitudinal section of a preferred embodiment of a filtering device using an element for cleaning a filtering surface according to the present invention;
- figure 2A illustrates a schematic front elevation view of a preferred embodiment of an element for cleaning a filtering surface according to the present invention;
- figure 2B illustrates a schematic view in longitudinal section, taken along the line A-A of figure 2A, of the preferred embodiment of an element for cleaning a filtering surface according to the present invention.

The appended drawings illustrate a preferred embodiment 10 of an element for cleaning a filtering surface 11, in particular in the form of a cylindrical surface, of a corresponding filter 13, which is adapted to retain solid particles which are contained in a respective fluid, in particular in the form of a liquid, and preferably consisting of water.

Preferably, said filter 13 is defined by a corresponding peripherally extended body, in particular cylindrical, which has corresponding openings, or holes, for the passage of said fluid and for retaining said solid particles, which filter 13 is inserted in a filtration device 15, which is advantageously usable in corresponding civil or industrial plants which use or treat said fluid.

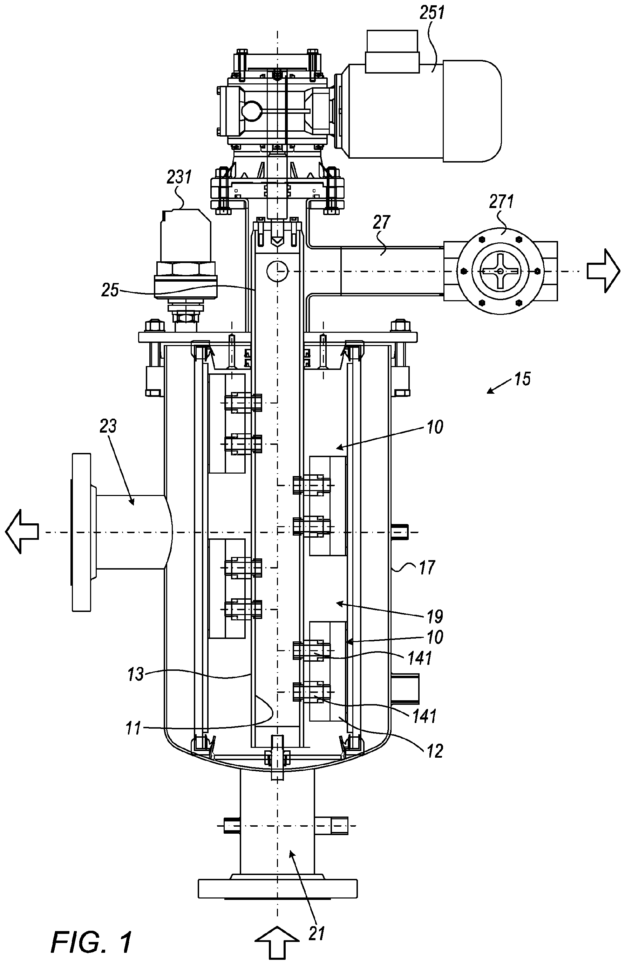

As can be seen in figure 1, the filtration device 15 comprises a corresponding hollow body 17, which defines a corresponding housing chamber 19 for said filter and which has at least one inlet opening 21 of said fluid with said solid particles, preferably opening into a zone inside said filter 13, and at least one outlet opening 23 of said fluid without said particles opening outside said filter 13.

As can be seen in figure 1, the filtration device 15 further comprises means for cleaning said filtering surface from said solid particles which have been retained by the same filtering surface, which cleaning means comprise corresponding suction means, in particular comprising a corresponding duct 25, preferably central to said supporting filter, and one or more cleaning elements 10, which are movable along the entire surface, in particular inner 11, of said filter 13 to completely clean it of said filtered solid particles.

In particular, said central suction duct 25 is preferably made of rigid material, for example of corresponding metal material.

In particular, in order to allow the cleaning elements 10 to move along said filtering surface 11, the central duct 25 is rotatable with respect to the body 17 of the filtration device, upon actuation of a corresponding motor 251.

A further duct 27 is connected to said central duct 25 to receive the sucked solid particles and carry them towards a corresponding discharge.

As illustrated, said duct 27, which is connected to said central duct 25, extends transversely to the filtration device. It must however be understood, according to a different embodiment, not shown in the appended drawings, said duct 27 could also be axial, in particular when the inlet and outlet from the filter are provided laterally.

For this purpose, a motor 271 opens a corresponding valve in suction, when the filter is cleaned, and closes the same valve, when the device operates in normal filtering mode. The opening and closing of said valve could in any case, in compliance with another embodiment not illustrated in the appended drawings, also be actuated pneumatically, or, according to a still further embodiment, it could be operated through a corresponding suction pump, also not illustrated in the appended drawings.

An automatic vent valve is marked with reference numeral 231 in figure 1, which ensures the venting of the air in the pressurisation step with water and the entry of air during the depressurisation step to ensure the presence of at least atmospheric pressure in the event of emptying the filter device 15. According to a different embodiment, however not illustrated in the appended drawings, a corresponding valve could also be used at the outlet opening 23, which is controlled in the opening condition during filtration and which is instead controlled in the closing condition during cleaning.

In particular, as can be seen in figure 1, according to the present preferred embodiment of the device 15, said fluid with solid particles enters said filter 13 centrally or longitudinally and radially exits through said openings to the same filter 13.

As can be clearly seen in the figures, the cleaning element 10 comprises a respective block 12, which has a respective end surface 121, which is adapted to be arranged at, and preferably in contact with, said surface to be cleaned 11 of said filter 13, in which end surface at least one corresponding opening 122 is provided, in particular slot-shaped, through which said solid particles retained by the same filter 13 are sucked.

The cleaning element 10 comprises at least one nozzle 14, in particular opening into said inner chamber 123 of said block 12 in communication with said suction opening 122.

Preferably, as illustrated, first and second nozzles 14, 14 are provided, opening into said inner chamber 123 of said block 12 in communication with said suction opening 122.

In particular, as illustrated, the respective nozzle 14, 14 is defined at the end of a corresponding tube 141, for connection to said suction duct 25 and is adapted to support, in particular at the respective free end, the same cleaning block 12.

Advantageously, said first and second nozzles 14, 14 are defined at the end of corresponding first and second tubes 141, 141, both of which are connected to a corresponding suction duct 25.

The use of a first and a second tubes 141, 141, or also of a greater number of said tubes, for the connection to a corresponding suction duct 25, advantageously allows to prevent any rotation movement of the block 12 with respect to the surface to be cleaned, and therefore guarantees the perfect correspondence between the outer surface of the block and the inner filtering surface 11 of the filter 13.

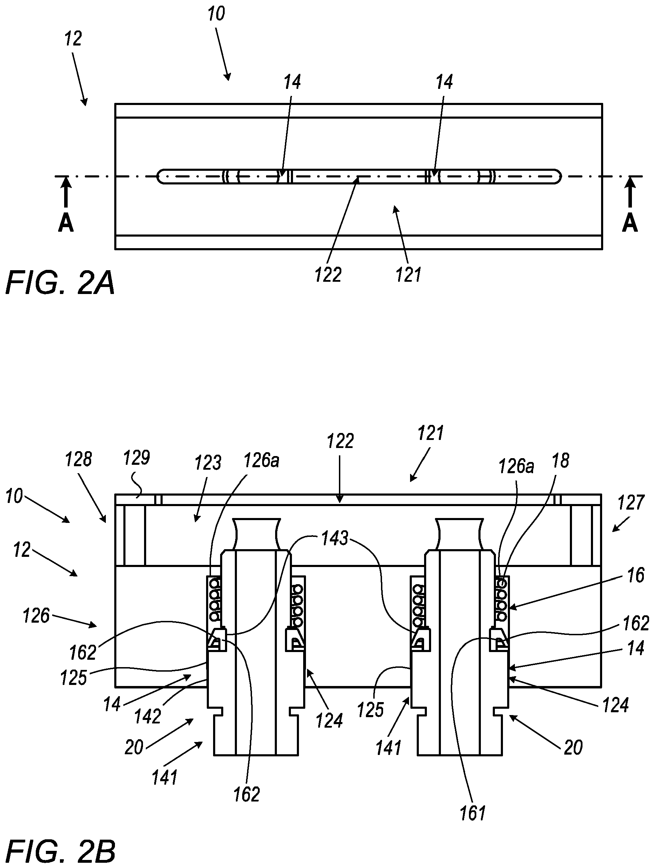

As can be seen in figure 2B, the connection tube 141, 141, defining the respective suction nozzle 14, 14, has a corresponding outer surface 142, 142 and is inserted in a corresponding receiving cavity 124, 124 of said cleaning block 12, in a sliding contact relationship with the peripheral surface 125 defining the same cavity 124.

Advantageously, as illustrated in particular in figure 2B, at least one respective gasket 16 is provided between said outer surface 142, 142 of said connection tube 141, 141 and said peripheral surface 125 defining the same receiving cavity 124, 124 which ensures the hermetic seal in the suction step of said solid particles.

Thereby, the production of losses can be avoided in the suction step of said solid particles, and thus the suction efficiency is increased.

As can be seen in said figure 2B, advantageously, said hermetic seal gasket 16 is at a recessed peripheral groove 143, 143 of said outer surface 142, 142 of said connection tube 141, 141.

Advantageously, as can be seen in said figure 2B, said hermetic seal gasket 16 is lip-shaped and has a base portion 161, in particular annular, for fixing to said outer surface 142, 142 of the connection tube 141, 141, and from the end of which, in particular the front one in use, extends a portion 162, in particular inclined backwards, for engagement against the opposite part of the peripheral surface 125, 125 defining said receiving cavity 124, 124.

Particularly advantageously, said hermetic seal gasket 16 is made of rubber.

As can be seen in said figure 2B, advantageously, elastic means 18 are included for pushing said cleaning block 12, or pushing said end surface 121 thereof, towards and against said surface to be cleaned 11 of said filter 13.

As can be seen in said figure 2B, said hermetic seal gasket 16 is positioned behind or upstream of said elastic pushing means 18 of said cleaning block 12.

Advantageously, as can be seen in said figure 2B, said elastic pushing means 18 are in the form of corresponding elastic compression means.

As can be seen in said figure 2B, advantageously, said elastic pushing means 18 are in the form of a corresponding helical metal spring.

Advantageously, said helical metal spring 18 is made of stainless material, in particular of duplex steel. Thereby, it is possible to use the cleaning element even with chemically aggressive fluids, for example also with sea water.

Advantageously, said cleaning block 12 can be made of plastic material, aluminium bronze, stainless steel, or duplex or super duplex steel.

As can be seen in said figures 2A and 2B, said cleaning block 12 comprises a solid portion 126, rear in use, within which said one or more receiving cavities 124, 124 of said connection tube 141, 141 are made, and a portion 127, front in use, which comprises a peripheral wall 128 and a transversely end wall, front in use, 129, defining the front face 121 of the block 12 and defining, with said peripheral wall 128, said inner chamber 123 of said block 12, which transversely end wall, front in use, 129 has a corresponding elongated central split, or slot, defining the suction opening 122.

Advantageously, as can be seen in said figures 2A and 2B, said cleaning block 12 has a general elongated prism shape.

Advantageously, as can be seen in said figures 2A and 2B, the respective suction nozzle 14, 14 is close to and aligned with said suction opening 122.

As can be seen from said figures 2A and 2B, in a particularly advantageous manner, the respective receiving cavity 124, 124 of said connection tube 141, 141 is made in said solid portion 126, rear in use, of said cleaning block 12 and opens into said inner chamber 123 of said block 12 which is in communication with, or opens into, said suction opening 122.

As can be seen in figure 2B, said elastic means 18 for pushing said cleaning block 12 towards and against said surface to be cleaned 11 of said filter 13 engage against an annular shoulder 126a provided in said cleaning block 12, in particular in said solid portion 126, near the end of said cavity 124, 124, for receiving said connection tube 141, 141, which opens into said inner chamber 123 of said block 12 in communication with said suction opening 122.

As can be seen in figure 2B, advantageously, means 20 are provided for fixing said connection tube 141, 141 to said suction duct 25.

Advantageously, said means 20 for fixing said connection tube 141, 141 to said suction duct 25 are preferably in the form of a thread made in 20 in the body of said connection tube 141, 141 and which cooperates with a corresponding thread included on the circumferential surface which defines the corresponding receiving hole of the respective end of the tube which is made in the same suction duct 25.

In practice, as is evident, the above illustrated technical features allow, individually or in a respective combination, to achieve one or more of the following advantageous results:
- the production of losses can be avoided, in the suction step of said solid particles, and thus the suction efficiency is increased;
- it is possible to use the cleaning element even with chemically aggressive fluids, for example also with sea water;
- they make it possible to set up a cleaning element in a completely easy and quick manner.

The present invention is susceptible to evident industrial application. The person skilled in the art will also be able to imagine numerous modifications and/or variations to be made to the same invention, while remaining within the scope of the inventive concept, as extensively explained. Moreover, the person skilled in the art will be able to imagine further preferred embodiments of the invention which comprise one or more of the above illustrated characteristics of the preferred embodiment. Moreover, it must also be understood that all the details of the invention can be replaced by technically equivalent elements.

## Claims

1. Element (10) for cleaning a filtering surface (11), in particular in the form of a cylindrical surface, of a corresponding filter (13), which is adapted to retain solid particles which are contained in a respective fluid, in particular in the form of a liquid, and preferably consisting of water; preferably said filter (13) is defined by a corresponding peripherally extended body, in particular cylindrical, which has corresponding openings, or holes, for the passage of said fluid and for retaining said solid particles, which filter (13) is inserted in a filtration device (15) which is usable in corresponding civil or industrial plants which use or treat said fluid; said cleaning element (10) comprises a respective block (12) having a respective end surface (121) which is adapted to be arranged at, and in contact with, said surface to be cleaned (11) of said filter (13), in which end surface is provided at least one corresponding opening (122), in particular slot-shaped, through which said solid particles retained by the same filter (13) are sucked, said cleaning element (10) further comprises at least one nozzle, in particular opening into a corresponding inner chamber (123) of said block (12) in communication with said suction opening (122), in particular the respective nozzle (14, 14) being defined at the end of a corresponding tube (141, 141) for connection to a corresponding suction duct (25) and is adapted to support, in particular at the respective free end, the same cleaning block (12); said connection tube (141, 141) defining the respective suction nozzle (14, 14) has a corresponding outer surface (142, 142) and is inserted in a corresponding receiving cavity (124, 124) of said cleaning block (12), in a sliding contact relationship with the same peripheral surface (125) defining said cavity (124); between said outer surface (142, 142) of said connection tube (141, 141) and said peripheral surface (125) defining the same receiving cavity (124, 124), at least one respective gasket (16) being provided, which is adapted to allow a corresponding hermetic seal during the suction step of said solid particles; elastic means (18) being provided for pushing said cleaning block (12), or pushing said end surface (121) thereof, towards and against said surface to be cleaned (11) of said filter (13); said cleaning block (12) comprising a solid portion (126), rear in use, within which said receiving cavity (124, 124) of said connection tube (141, 141) is made, and a portion (127), front in use, comprising a peripheral wall (128) and a transversely end wall, front in use, (129), defining the front face (121) of the block (12) and defining, with said peripheral wall (128), said inner chamber (123) of said block (12); **characterised in that** said hermetic seal gasket (16) is positioned behind or upstream of said elastic means (18) for pushing said cleaning block (12); and **in that** said elastic means (18) for pushing said cleaning block (12) towards and against said surface to be cleaned (11) of said filter (13) engage against an annular shoulder (126a) provided in said cleaning block (12), in said solid portion (126), near the end of said receiving cavity (124, 124) of said connection tube ( 141, 141), which opens into said inner chamber (123) of said block (12) in communication with said suction opening (122).

2. Element according to claim 1, **characterised in that** said hermetic seal gasket (16) is at a recessed peripheral groove (143) of said outer surface (142, 142) of said connection tube (141, 141).

3. Element according to any one of the preceding claims, **characterised in that** said hermetic seal gasket (16) is lip-shaped and has a base portion (161), in particular annular, for fixing to said outer surface (142, 142) of the connection tube (141, 141), and from the end of which, in particular the front one in use, extends a portion (162), in particular inclined backwards, for engagement against the opposite part of the peripheral surface (125) defining said receiving cavity (124, 124).

4. Element according to any one of the preceding claims, **characterised in that** a first and a second nozzles (14, 14) are provided, opening into said inner chamber (123) of said block (12) in communication with said suction opening (122), in particular said first and second nozzles (14, 14) being defined at the end of corresponding first and second small tubes (141, 141) for connection to a corresponding suction duct (25).

5. Element according to any one of the preceding claims, **characterised in that** said elastic pushing means (18) are in the form of corresponding elastic compression means.

6. Element according to any one of the preceding claims, **characterised in that** said elastic pushing means (18) are in the form of a corresponding helical metal spring.

7. Element according to claim 6, **characterised in that** said helical metal spring (18) is made of stainless material.

8. Element according to any one of the preceding claims, **characterised in that** said cleaning block (12) is made of plastic, aluminium bronze, stainless steel, or duplex or super duplex steel.

9. Element according to any one of the preceding claims, **characterised in that** said cleaning block (12) comprises a solid portion (126), rear in use, within which said one or more receiving cavities (124, 124) of said connection tube (141, 141) are made, and a portion (127), front in use, comprising a peripheral wall (128) and a transversely end wall, front in use, (129), defining the front face (121) of the block (12) and defining, with said peripheral wall (128), said inner chamber (123) of said block (12), which transversely end wall, front in use, (129) has a corresponding elongated central split, or slot, defining the suction opening (122).

10. Element according to any one of the preceding claims, **characterised in that** said cleaning block (12) has a general elongated prism shape.

11. Element according to any one of the preceding claims, **characterised in that** the respective suction nozzle (14, 14) is close to and aligned with said suction opening (122).

12. Element according to any one of the preceding claims, **characterised in that** the respective receiving cavity (124, 124) of said connection tube (141, 141) is made in said solid portion (126), rear in use, of said cleaning block (12) and opens into said inner chamber (123) of said block (12) which is in communication with, or opens in, said suction opening (122).

13. Element according to any one of the preceding claims, **characterised in that** means (20) are provided for fixing said connection tube (141, 141) to said suction duct (25).

14. Element according to claim 13, **characterised in that** said means (20) for fixing said connection tube (141, 141) are in the form of a thread made (in 20) in the body of said connection tube (141, 141) and which cooperates with a corresponding thread included on the circumferential surface which defines the corresponding receiving hole of the respective end of the tube which is made in the same suction duct (25).

## Patentansprüche

1. Element (10) zum Reinigen einer insbesondere zylindermantelförmigen Filterfläche (11) eines entsprechenden Filters (13), das zum Zurückhalten von Feststoffpartikeln geeignet ist, die in einem jeweiligen Fluid, insbesondere in Form einer Flüssigkeit, enthalten sind und vorzugsweise aus Wasser besteht, wobei der Filter (13) vorzugsweise durch einen entsprechenden, in Umfangsrichtung geformten, insbesondere zylindrischen Körper definiert ist, der entsprechende Öffnungen oder Löcher für den Durchgang des Fluides aufweist und zum Zurückhalten der Feststoffpartikel, wobei der Filter (13) in eine Filtervorrichtung (15) eingesetzt ist, die in entsprechenden zivilen oder industriellen Anlagen verwendet werden kann, die das Fluid verwenden oder behandeln, wobei das Reinigungselement (10) einen entsprechenden Block (12) mit jeweils einer Endfläche (121), umfasst, die dazu geeignet ist, auf der zu reinigenden Oberfläche (11) des Filters (13) angeordnet und mit dieser in Kontakt gebracht zu werden, wobei in der Endfläche mindestens eine entsprechende Öffnung (122), insbesondere in Form eines Schlitzes, vorgesehen ist, durch den die von demselben Filter (13) zurückgehaltenen Feststoffpartikel angesaugt werden, wobei das Reinigungselement (10) außerdem mindestens eine, insbesondere nach innen offene Düse aufweist, die insbesondere zu einer entsprechenden Innenkammer (123) des Blocks (12) geöffnet ist, die mit der Saugöffnung (122) in Verbindung steht, wobei insbesondere die jeweilige Düse (14, 14) am Ende eines entsprechenden Rohrs (141, 141) zum Anschluss an einen entsprechenden Saugkanal (25), und zur Abstützung desselben Reinigungsblocks (12), insbesondere am jeweiligen freien Ende, definiert ist; wobei das Verbindungsrohr (141, 141), das die jeweilige Saugdüse (14, 14) mit einer entsprechenden Außenfläche definiert, gleitend in einen entsprechenden Aufnahmehohlraum (124, 124) des Reinigungsblocks (12) eingesetzt und in Kontaktbeziehung mit derselben Umfangsfläche (125) steht, die den Hohlraum (124) definiert; wobei zwischen der Außenfläche (142, 142) des Verbindungsrohrs (141, 141) und der Umfangsfläche (125), die den gleichen Aufnahmehohlraum (124, 124) definiert, jeweils mindestens eine Dichtung (16) vorgesehen ist, die dazu geeignet ist, eine entsprechende hermetische Abdichtung während der Ansaugphase der Feststoffpartikel zu ermöglichen; wobei elastische Mittel (18) vorgesehen sind, um den Reinigungsblock (12) oder seine Endfläche (121) in Richtung und gegen die zu reinigende Oberfläche (11) des Filters (13) zu drücken; wobei der Reinigungsblock (12) einen im Gebrauch hinteren massiven Teil (126), in dem sich der Aufnahmehohlraum (124, 124) des Verbindungsrohrs (141, 141) befindet, und einen im Gebrauch vorderen Teil (127) aufweist, die eine Umfangswand (128) und eine im Gebrauch vordere Querendwand (129) umfasst, die die Vorderfläche (121) des Blocks (12) definiert und zusammen mit der Umfangswand (128) die Innenkammer (123) des Blocks (12) definiert, **dadurch gekennzeichnet, dass** die hermetische Dichtung (16) hinter oder vor den elastischen Mitteln (18) positioniert ist, um den Reinigungsblock (12) zu drücken; und dass die elastischen Mittel (18) zum Drücken des Reinigungsblocks (12) in Richtung und gegen die zu reinigende Oberfläche (11) des Filters (13) an einer ringförmigen Schulter (126a) anliegen, die im Reinigungsblock (12) in dem massiven Teil (126) und nahe dem Ende des Aufnahmehohlraums (124, 124) des Verbindungsrohrs (141, 141), vorgesehen ist und zu der Innenkammer (123) des Blocks (12) geöffnet ist und mit der Ansaugöffnung (122) in Verbindung steht.

2. Element nach Anspruch, **dadurch gekennzeichnet, dass** die hermetische Dichtung (16) in einer vertieften Umfangsnut (143) der Außenfläche (142, 142) des Verbindungsrohrs (141, 141) angeordnet ist.

3. Element nach einem der vorhergehenden Ansprüche, **dadurch gekennzeichnet, dass** die hermetische Dichtung (16) lippenförmig ausgebildet ist und einen insbesondere ringförmigen Basisteil (161) zur Befestigung an der Außenfläche (142, 142 ) des Verbindungsrohrs (141, 141) aufweist und wobei von dessen Ende, insbesondere vom im Gebrauch vorderen Ende, sich ein Teil (162) erstreckt, der insbesondere zum hinteren Teil hin geneigt ist, zur Kopplung mit dem gegenüberliegenden Teil der Umfangsfläche (125), der den Aufnahmehohlraum (124, 124) definiert.

4. Element nach einem der vorhergehenden Ansprüche, **dadurch gekennzeichnet, dass** eine erste und eine zweite Düse (14, 14) vorgesehen sind, die zur Innenkammer (123) des Blocks (12) hin offen sind und in Kommunikation mit der Saugöffnung (122) stehen, wobei insbesondere die ersten und zweiten Düsen (14, 14) am Ende entsprechender erster und zweiter Röhrchen (141, 141) für eine Verbindung mit einem entsprechenden Saugkanal (25) definiert sind.

5. Element nach einem der vorhergehenden Ansprüche, **dadurch gekennzeichnet, dass** die elastischen Schubmittel (18) die Form entsprechender elastischer Kompressionsmittel haben.

6. Element nach einem der vorhergehenden Ansprüche, **dadurch gekennzeichnet, dass** die elastischen Schubmittel (18) die Form einer entsprechenden Metallschraubenfeder haben.

7. Element nach Anspruch 6, **dadurch gekennzeichnet, dass** die metallische Schraubenfeder (18) aus rostfreiem Material hergestellt ist.

8. Element nach einem der vorhergehenden Ansprüche, **dadurch gekennzeichnet, dass** der Reinigungsblock (12) aus Kunststoff, Aluminiumbronze, Edelstahl oder Duplex- oder Superduplexstahl besteht.

9. Element nach einem der vorhergehenden Ansprüche, **dadurch gekennzeichnet, dass** der Reinigungsblock (12) im im Gebrauch hinteren festen Teil (126) aufweist, in dessen Inneren sich der eine oder die mehreren Aufnahmehohlräume (124, 124) des Verbindungsrohrs (141, 141) befinden und einen im Gebrauch vorderen Teil (127) aufweisen, der eine Umfangswand (128) und eine quer verlaufende Endwand (129) umfasst, die die Vorderfläche (121) des Blocks (12) zusammen mit der Umfangswand (128) definiert, wobei die innere Kammer (123) des Blocks (12), deren quer verlaufende im Gebrauch vorderen Endwand (129), einen entsprechenden länglichen zentralen Schlitz oder Nut aufweist, die die Saugöffnung (122) definieren.

10. Element nach einem der vorhergehenden Ansprüche, **dadurch gekennzeichnet, dass** der Reinigungsblock (12) eine im Wesentlichen längliche Prismenform aufweist.

11. Element nach einem der vorhergehenden Ansprüche, **dadurch gekennzeichnet, dass** die jeweilige Saugdüse (14, 14) nahe an der Saugöffnung (122) liegt und mit dieser fluchtet.

12. Element nach einem der vorhergehenden Ansprüche, **dadurch gekennzeichnet, dass** der jeweilige Aufnahmehohlraum (124, 124) des Verbindungsrohrs (141, 141) im massiven, im Gebrauch hinteren Teil (126) des Reinigungsblocks (12) ausgebildet ist und mündet in die Innenkammer (123) des Blocks (12), die mit der Saugöffnung (122) in Verbindung steht oder in diese mündet.

13. Element nach einem der vorhergehenden Ansprüche, **dadurch gekennzeichnet, dass** Mittel (20) zur Befestigung des Verbindungsrohrs (141, 141) am Saugkanal (25) vorgesehen sind.

14. Element nach Anspruch 13, **dadurch gekennzeichnet, dass** die Mittel (20) zur Befestigung des Verbindungsrohrs (141, 141) die Form eines Gewindes haben, das (bei 20) im Körper des Verbindungsrohrs (141, 141) erhalten ist und mit dem es mit einem entsprechenden Gewinde an der Umfangsfläche zusammenwirkt, die das entsprechende Aufnahmeloch des jeweiligen Rohrendes definiert, das in den gleichen Saugkanal (25) gebildet ist.

## Revendications

1. Elément (10) pour nettoyer une surface filtrante (11), notamment en forme de surface cylindrique, d'un filtre (13) correspondant, adapté à retenir des particules solides contenues dans un fluide respectif, notamment sous la forme d'un liquide, et de préférence constitué d'eau, où de préférence ledit filtre (13) est défini par un corps correspondant développé dans un sens périphérique, notamment cylindrique, qui présente des ouvertures ou trous correspondants pour le passage dudit fluide et pour retenir lesdites particules solides, le filtre (13) étant inséré dans un dispositif de filtrage (15) qui peut être utilisé dans des systèmes civils ou industriels correspondants qui utilisent ou traitent ledit fluide, dans lequel ledit élément de nettoyage (10) comprend un bloc respectif (12) avec une surface d'extrémité respective (121) qui est appropriée pour être disposée sur et en contact avec ladite surface à nettoyer (11) dudit filtre (13), dans ladite surface d'extrémité est ménagée au moins une ouverture correspondante (122), notamment en forme de fente, par laquelle sont aspirées lesdites particules solides retenues par le même filtre (13), où ledit élément de nettoyage (10) comprend en outre au moins une buse, notamment ouverte en une chambre interne correspondante (123) dudit bloc (12) en communication avec ladite ouverture d'aspiration (122), où notamment la buse respective (14, 14) est définie à l'extrémité d'un tube correspondant (141, 141) pour le raccordement avec un conduit d'aspiration correspondant (25) et est capable de supporter, notamment sur l'extrémité libre respective, le même bloc de nettoyage (12) ; ledit tube de raccordement (141, 141), qui définit la buse d'aspiration respective (14, 14), présente une surface externe correspondante (142, 142) et est inséré dans une cavité de réception correspondante (124, 124) dudit bloc de nettoyage (12), avec une relation de coulissement en contact avec la même surface périphérique (125) qui définit ladite cavité (124); où entre ladite surface externe (142, 142) dudit tube de raccordement (141, 141) et ladite surface périphérique (125), qui définit la même cavité de réception (124, 124), au moins un joint respectif (16) est prévu), apte à permettre une fermeture hermétique correspondante pendant la phase d'aspiration desdites particules solides; des moyens élastiques (18) étant prévus pour pousser ledit bloc de nettoyage (12) ou pour pousser ladite surface d'extrémité (121) de celui-ci, vers et contre ladite surface à nettoyer (11) dudit filtre (13); ledit bloc de nettoyage (12) comprenant une partie solide (126) arrière en utilisation, à l'intérieur de laquelle est ménagée ladite cavité de réception (124, 124) dudit tube de raccordement (141, 141), et une partie (127), avant en utilisation, comprend une paroi périphérique (128) et une paroi terminale transversale, avant en utilisation (129), qui définit la surface avant (121) du bloc (12) et définit avec ladite paroi périphérique (128) ladite chambre interne (123) dudit bloc (12), **caractérisé en ce que** ledit joint hermétique (16) est positionné derrière ou en amont desdits moyens élastiques (18) pour pousser ledit bloc de nettoyage (12); et que lesdits moyens élastiques (18) pour pousser ledit bloc de nettoyage (12) vers et contre ladite surface à nettoyer (11) dudit filtre (13), s'engagent contre un épaulement annulaire (126a) ménagé dans ledit bloc de nettoyage (12), dans ladite partie solide (126), à proximité de l'extrémité de ladite cavité de réception (124, 124) dudit tube de raccordement (141, 141) ouverte dans ladite chambre interne (123) dudit bloc (12), en communication avec ladite ouverture d'aspiration (122).

2. Elément selon la revendication 1, **caractérisé en ce que** ledit joint hermétique (16) est situé dans une rainure périphérique en retrait (143) de ladite surface externe (142, 142) dudit tube de raccordement (141, 141).

3. Elément selon l'une des revendications précédentes, **caractérisé en ce que** ledit joint hermétique (16) est réalisé en forme de lèvre et présente une partie de base (161) notamment annulaire, pour la fixation à ladite surface externe (142,142) du tube de raccordement (141,141) et à partir de l'extrémité duquel, notamment de celle avant en utilisation, se développe une partie (162) notamment inclinée vers la partie arrière, pour un couplage contre la partie opposée de la surface périphérique (125) qui définit ladite cavité de réception (124, 124).

4. Elément selon l'une des revendications précédentes, **caractérisé en ce qu'**il est prévu une première et une deuxième buse (14, 14), ouvertes vers ladite chambre interne (123) dudit bloc (12) en communication avec ladite ouverture d'aspiration (122), où notamment lesdites première et deuxième buses (14, 14) sont définies à l'extrémité des premier et deuxième petits tubes (141, 141) correspondants pour un raccordement à un conduit d'aspiration correspondant (25).

5. Elément selon l'une des revendications précédentes, **caractérisé en ce que** lesdits moyens élastiques de poussée (18) ont la forme de moyens élastiques de compression correspondants.

6. Elément selon l'une des revendications précédentes, **caractérisé en ce que** lesdits moyens de poussée élastique (18) ont la forme d'un ressort hélicoïdal métallique correspondant.

7. Elément selon la revendication 6, **caractérisé en ce que** ledit ressort hélicoïdal métallique (18) est réalisé en matériau inoxydable.

8. Elément selon l'une des revendications précédentes, **caractérisé en ce que** ledit bloc de nettoyage (12) est réalisé en matière plastique, bronze d'aluminium, acier inoxydable ou acier duplex ou super duplex.

9. Elément selon l'une des revendications précédentes, **caractérisé en ce que** ledit bloc de nettoyage (12) comprend une partie solide (126), arrière en utilisation, à l'intérieur de laquelle sont ménagées lesdites une ou plusieurs cavités de réception (124, 124) du ledit tube de raccordement (141, 141), et une partie (127), avant en utilisation, comprend une paroi périphérique (128) et une paroi d'extrémité transversale, avant en utilisation (129), qui définit la surface avant (121) du bloc (12) et définit, conjointement avec ladite paroi périphérique (128), ladite chambre interne (123) dudit bloc (12), dont la paroi d'extrémité transversale, avant en utilisation (129), présente une ouverture centrale allongée correspondante, ou fente, qui définit l'ouverture d'aspiration (122).

10. Elément selon l'une des revendications précédentes, **caractérisé en ce que** ledit bloc de nettoyage (12) a une forme générique prismatique allongée.

11. Elément selon l'une des revendications précédentes, **caractérisé en ce que** la buse d'aspiration respective (14, 14) est proche et alignée avec ladite ouverture d'aspiration (122).

12. Elément selon l'une des revendications précédentes, **caractérisé en ce que** la cavité de réception respective (124, 124) dudit tube de raccordement (141, 141) est ménagée dans ladite partie solide (126), arrière en utilisation, dudit bloc de nettoyage (12) et est ouverte vers ladite chambre interne (123) dudit bloc (12) qui est en communication avec ou est ouvert vers ladite ouverture d'aspiration (122).

13. Elément selon l'une des revendications précédentes, **caractérisé en ce que** des moyens (20) sont prévus pour fixer ledit tube de raccordement (141,141) audit conduit d'aspiration (25).

14. Elément selon la revendication 13, **caractérisé en ce que** lesdits moyens (20) de fixation dudit tube de raccordement (141, 141) ont la forme d'un filetage ménagé (en 20) dans le corps dudit tube de raccordement (141, 141), qui coopère avec un filetage correspondant inclus sur la surface circonférentielle qui définit le trou de réception correspondant de l'extrémité respective du tube, qui est ménagé dans le même conduit d'aspiration (25).
